Europäisches Patentamt

European Patent Office

Office européen des brevets

(11) Veröffentlichungsnummer: **0 340 796**
**A2**

(12) **EUROPÄISCHE PATENTANMELDUNG**

(21) Anmeldenummer: 89108185.3

(51) Int. Cl.⁴: **B60J 7/22**

(22) Anmeldetag: 05.05.89

(30) Priorität: 05.05.88 DE 8805994 U

(43) Veröffentlichungstag der Anmeldung:
**08.11.89 Patentblatt 89/45**

(84) Benannte Vertragsstaaten:
**DE FR GB IT**

(71) Anmelder: **Stobinski, Peter**
**Friendrich-List-Strasse 3**
**D-7030 Böblingen(DE)**

(72) Erfinder: **Stobinski, Peter**
**Friendrich-List-Strasse 3**
**D-7030 Böblingen(DE)**

(74) Vertreter: **Brügel, Gerhard**
**Wendelsteinstrasse 12**
**D-7032 Sindelfingen(DE)**

(54) **Vorrichtung zur Verringerung von Luftströmungen im Vordersitzbereich von Fahrzeugen.**

(57) In offenen Fahrzeugen treten im Vordersitzbereich störende Luftströmungen auf. Nach dem Stande der Technik wurde versucht diese Luftströmungen durch eine Abtrennung hinter den Vordersitzen zu beseitigen. Gemäß der Erfindung sind zur völligen Vermeidung von Luftströmungen in der Abtrennung mehrere Öffnungen, insbesondere viele feine Löcher vorgesehen.

FIG. 2

EP 0 340 796 A2

## Vorrichtung zur Verringerung von Luftströmungen im Vordersitzbereich von Fahrzeugen

Bei offenen Fahrzeugen, z.B. Kraftfahrzeugen mit zu öffnendem Verdeck, sogenannten Kabrioletts oder Hardtops, treten bei höheren Geschwindigkeiten unangenehme Luftströmungen, als Zugerscheinungen auf. Diese Luftströmungen, die auch Staub mit sich tragen, werden hauptsächlich durch Luftwirbel erzeugt, die im Bereich der Vordersitze eine Luftströmung in Fahrtrichtung erzeugen.

Durch das DE-Gebrauchsmuster 1797558 ist eine Rückenwindschutzscheibe für Kabrioletts bekannt, die hinter den Vordersitzen angeordnet ist und über die ganze Breite des Wagens reicht. Diese bekannte Rückenwindschutzscheibe die aus Plexiglas besteht, vermindert die Zugerscheinungen im Vordersitzbereich nur unvollkommen, weil die über die obere Kontur der Karosserie streichende Luft infolge schneller Strömung und daraus resultierndem Unterdruck zwischen Frontscheibe und Rückenwindschutzscheibe nach unten in den Vordersitzbereich hineingezogen wird, so daß mindestens im Kopfbereich von Fahrer und Beifahrer nach wie vor eine Luftströmung zu spüren ist.

Durch die DE-OS 3537644 ist eine ähnliche Vorrichtung bekannt, durch die ein Kabriolett durch eine horizontale Abdeckung auf der Höhe der Fensterunterkante im hinteren Bereich abgedeckt ist. Zusätzlich ist im Bereich des Überrollbügels eine Schutzscheibe vorgesehen, die sich bis auf zwei Drittel der lichten Höhe des Überrollbügels erstreckt. Diese Scheibe soll den Rückstau von Fahrtwindwirbeln im Bereich der Vordersitze vermindern. Auch bei dieser Vorrichtung tritt der beim oben geschilderten Stand der Technik beschriebene Luftzug im Bereich der Köpfe der vorne Sitzenden auf.

Aufgabe der Erfindung ist die bekannten Abtrennungen so zu verbessern, daß auch die durch Unterdruck entstehenden Luftströmungen beseitigt werden.

Diese Aufgabe wird bei einer Vorrichtung gemäß dem Oberbegriff des Schutzanspruches 1 durch dessen kennzeichnende Merkmale gelöst. Weiterbildungen der Erfindung sind in den Ansprüchen 2 bis 7 definiert.

Ein Ausführungsbeispiel der Erfindung ist in der Zeichnung dargestellt und wird im folgenden beschrieben. Es zeigen

Fig. 1 die Seitenansicht eines Kabrioletts,

Fig. 2 einen Querschnitt durch dieses Fahrzeug und

Fig. 3 im Detail eine Befestigungsvorrichtung.

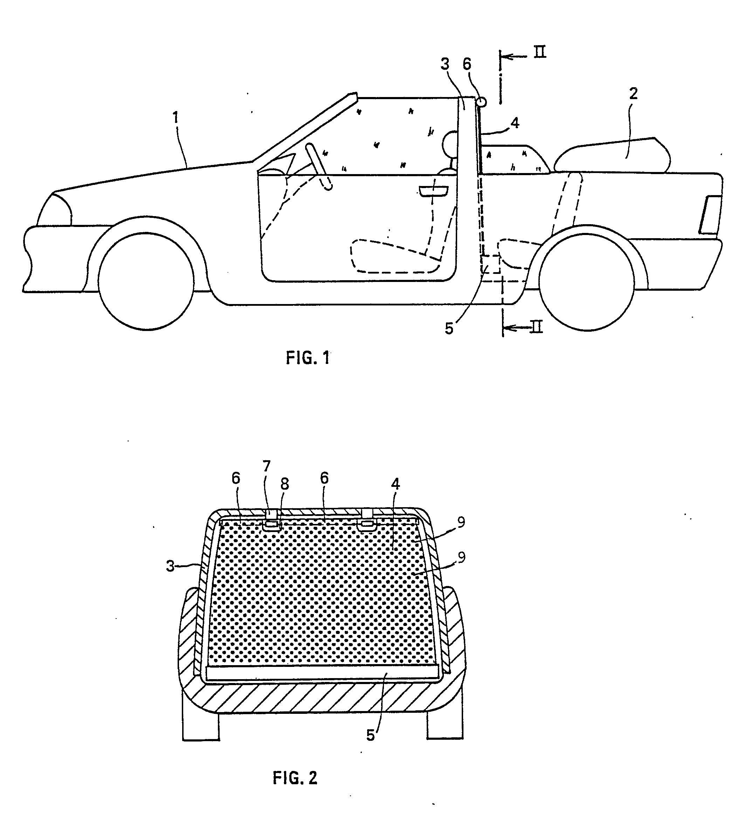

In Fig. 1 ist ein Kraftfahrzeug 1 mit heruntergeklapptem Verdeck 2 dargestellt. Die Fig. 2 zeigt den Querschnitt durch das Kraftfahrzeug 1. Die folgende Beschreibung bezieht sich deshalb sowohl auf die Fig.1 als auch auf die Fig.2.

Das Kraftfahrzeug 1 weist einen Überrollbügel 3 auf, der in üblicher Weise etwa in der Mitte des Fahrzeugs, hinter den Vordersitzen angeordnet ist. Die erfindungsgemäße Abtrennung 4 ist im vorliegenden Ausführungsbeispiel als nahezu senkrecht verlaufendes Rollo ausgeführt, dessen Aufrollmechanik 5 am Boden des Fahrzeuges 1 befestigt ist.

Erfindungsgemäß besteht die Rollobahn aus einer mit mehreren Öffnungen versehenen Folie oder insbesondere einer Gewebebahn, deren Maschen eine feine regelmäßige Perforation 9 bilden. Diese Öffnungen verhindern das Flattern der Abtrennung und ermöglichen einen langsamen Luftaustausch von hinten durch die Abtrennung hindurch, so daß der Unterdruck im oberen Vordersitzbereich ausgeglichen und dadurch der bei den bekannten luftundurchlässigen Abtrennungen vorhandene Luftzug im Kopfbereich der vorne Sitzenden vermieden wird.

Als Material für die Abtrennung hat sich eine Gewebebahn aus Polyester mit einer Dicke von 0,33 mm und 10 Maschen je cm Länge und Breite als besonders geeignet erwiesen.

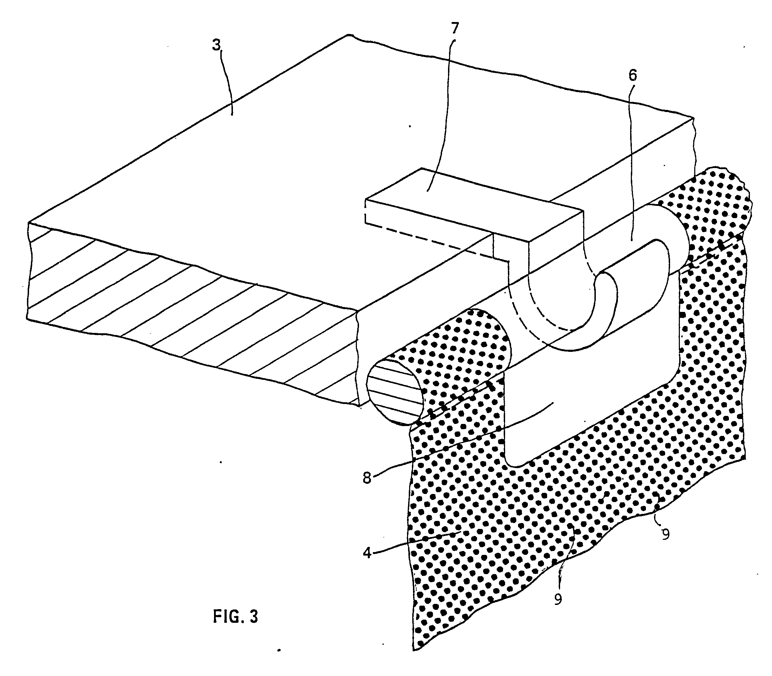

Fig. 3 zeigt im Detail die Befestigung der Rollobahn an der horizontalen Traverse des Überrollbügels 3. In diese Traverse sind Haken 7 eingelassen. In entsprechenden Abschnitten der Rollobahn befinden sich Ausschnitte 8, so daß eine Stange 6 in die Haken 7 eingehängt werden kann. Die Abtrennung 4, die den Querschnitt des Fahrzeugs 1 weitgehend ausfüllt, kann auch mittels Gummibändern und Haken ringsherum am Überrollbügel 3 befestigt sein.

Weist das Fahrzeug keinen Überrollbügel auf, so kann die Abtrennung 4 an der Oberkante der Seitenscheiben vorzugsweise der hinteren Seitenscheiben oder an der Hinterseite der Vordersitze befestigt werden. In Fahrzeugen ohne Überrollbügel können die Rollos auch mit Gelenkarmen wie sie bei Markisen bekannt sind, versehen sein, so daß diese Rollos freitragend sind.

Die Erfindung kann auch bei Kraftfahrzeugen mit nur einem Vordersitz Verwendung finden; ebenso ist sie bei anderen Fahrzeugen, beispielsweise Motorbooten verwendbar.

**Ansprüche**

1. Vorrichtung zur Verringerung von Luftströmungen im Vordersitzbereich von offenen Fahrzeugen (1), bestehend aus einer hinter dem/den Vordersitz(en) angeordneten Abtrennung (4), dadurch gekennzeichnet, daß die Abtrennung (4) mit einer feinen Perforation (9), oder mit mehreren Öffnungen versehen ist.

2. Vorrichtung nach Anspruch 1, dadurch gekennzeichnet, daß die Abtrennung (4) eine Folie oder Gewebebahn ist.

3. Vorrichtung nach Anspruch 1 oder 2, dadurch gekennzeichnet, daß die Abtrennung (4) aufwickelbar ist (Rollo).

4. Vorrichtung nach Anspruch 2 oder 3, dadurch gekennzeichnet, daß die Aufrollmechanik (5) für die Folie oder Gewebebahn am Boden des Fahrzeuges (1) befestigt ist.

5. Vorrichtung nach Anspruch 4, dadurch gekennzeichnet, daß die Aufrollmechanik (5), wie bei Markisen bekannt, mit Gelenkarmen versehen ist, so daß das Rollo freitragend ist.

6. Vorrichtung nach einem der Ansprüche 2 bis 4, dadurch gekennzeichnet, daß das obere freie Ende der Folie oder Gewebebahn, durch eine horizontal verlaufende Stange (6) versteift und mit Ausschnitten (8) versehen ist, die in, in die Quertraverse des Überrollbügels (3) eingelassene Haken (7), einhängbar ist.

7. Vorrichtung nach einem der Ansprüche 2 bis 4, dadurch gekennzeichnet, daß das obere Ende der Folie oder Gewebebahn an der Hinterseite der Vordersitze oder an den Seitenscheiben, vorzugsweise den hinteren Seitenscheiben, befestigbar ist.

FIG. 1

FIG. 2

FIG. 3